# EUROPÄISCHE PATENTSCHRIFT

(11) **EP 3 151 700 B1**
(45) Veröffentlichungstag und Bekanntmachung des Hinweises auf die Patenterteilung: **04.10.2017**
(21) Anmeldenummer: 15727637.9
(22) Anmeldetag: 03.06.2015
(51) Int. Cl.: A47B 46/00, A47L 15/50

(54) **SCHIEBE-SCHWENKMECHANIK EINER ABLAGE EINES MÖBELS ODER HAUSHALTSGERÄTES, MÖBEL UND HAUSHALTSGERÄT**
SLIDING-PIVOTING MECHANISM OF A SHELF OF A PIECE OF FURNITURE OR OF A DOMESTIC APPLIANCE, PIECE OF FURNITURE, AND DOMESTIC APPLIANCE
MÉCANISME COULISSANT-PIVOTANT D'UNE TABLETTE DE MEUBLE OU D'APPAREIL MÉNAGER, MEUBLE ET APPAREIL MÉNAGER

(30) Priorität: 05.06.2014 DE 102014107959
(43) Veröffentlichungstag der Anmeldung: 12.04.2017
(73) Patentinhaber: Paul Hettich GmbH & Co. KG, 32278 Kirchlengern (DE)
(72) Erfinder: AZKUE, Mikel, E-20800 Zarautz (ES); GARCIA, Oscar, E-20014 San Sebastian (ES); ARRIAGA, Eñaut, E-20240 Ordizia (ES); LOPETEGI, Iker, E-20800 Zarautz (ES); LASKIBAR, Unai, E-20800 Zarautz (ES)
(74) Vertreter: Dantz, Jan Henning
(86) Internationale Anmeldenummer: PCT/EP2015/062392
(87) Internationale Veröffentlichungsnummer: WO 2015/185636

(56) Entgegenhaltungen:
- WO-A1-2014/033092

## Beschreibung

Die Erfindung betrifft eine Schiebe-Schwenkmechanik einer Ablage eines Möbels oder Haushaltsgerätes zum Ausziehen oder Anheben der Ablage aus einem Korpus des Möbels oder aus einem Nutzraum eines Haushaltsgerätes gemäß dem Oberbegriff des Anspruchs 1. Die Erfindung betrifft des Weiteren ein Möbel sowie ein Haushaltsgerät mit einer Schiebe-Schwenkmechanik.

Solche Schiebe-Schwenkmechaniken werden insbesondere zur Komforterhöhung bei Möbeln oder Haushaltsgeräten, insbesondere Geschirrspülern oder Gargeräten verbaut. Eine in einem solchen Möbel oder Haushaltsgerät eingebaute Ablage kann mithilfe einer Schiebe-Schwenkmechanik aus einer unteren Position durch Herausziehen und anschließendes nach oben Schwenken in eine obere Position bewegt werden, bei der ein Benutzer auf oder in der Ablage abgelegte Gegenstände komfortabel be- oder entladen kann.

Eine gattungsgemäße Schiebe-Schwenkmechanik ist beispielsweise aus der WO 2014/03 3092 A1 bekannt.

Die dort beschriebene Schiebe-Schwenkmechanik hat sich in der Praxis durchaus bewährt.

Problematisch ist, dass insbesondere bei starker Beladung der Ablage die Arretierung der Schiebe-Schwenkmechanik in der oberen Position, bei der die Ablage in der angehobenen Stellung zur bequemen Be- bzw. Entladung positioniert ist, nicht immer zuverlässig arretiert.

Daraus ergibt sich die Aufgabe der vorliegenden Erfindung, eine Schiebe-Schwenkmechanik bereitzustellen, bei der die Arretierung der Schiebe-Schwenkmechanik verbessert wird.

Diese Aufgabe wird durch eine Schiebe-Schwenkmechanik einer Ablage eines Möbels oder Haushaltsgerätes mit den Merkmalen des Anspruchs 1 sowie durch ein Möbel oder Haushaltsgerät mit einer solchen Schiebe-Schwenkmechanik mit den Merkmalen der Ansprüche 9 bzw. 10 gelöst.

Die erfindungsgemäße Schiebe-Schwenkmechanik weist einen an mindestens einer der Seitenwände des Korpus des Möbels oder aus einem Nutzraum des Haushaltsgerätes mit einem ersten Ende parallel zur Ebene der Seitenwände drehbar festgelegten ersten und zweiten Schwenkarm auf. Die Schwenkarme sind dabei parallel zueinander beabstandet angeordnet. An jeweiligen zweiten Enden der Schwenkarme ist eine Führungsschiene derart parallel zur Ebene der Seitenwände schwenkbar festgelegt, dass die Führungsschiene aus einer unteren Position innerhalb des Korpus bzw. des Nutzraumes in eine angehobene, obere Position zumindest teilweise außerhalb des Korpus bzw. des Nutzraumes verschwenkbar ist. Die Ablage ist dabei an einer Laufschiene befestigt, die an oder in der Führungsschiene linear verschiebbar ist. An dieser Laufschiene ist des Weiteren ein Aktivator fixiert. Mit diesem ist ein an der Führungsschiene und an einem der Schwenkarme angeordneter Arretiermechanismus der Schiebe-Schwenkmechanik betätigbar, der zur Verhinderung einer Schwenkbewegung der Schiebe-Schwenkmechanik in einer angehobenen und einer abgesenkten Endposition dient. An dem ersten Schwenkarm ist ein mit einer einem Führungsschräge des Aktivators zusammenwirkendes Abstützelement ortsfest angeordnet, mit dem der Arretiermechanismus beim Anheben der Schiebe-Schwenkmechanik in eine die angehobene Endposition sichernde Arretierstellung bewegbar ist, wobei ein in Auszugsrichtung vorderes Ende der Führungsschräge des Aktivators als Anschlag ausgebildet ist.

Mithilfe dieses Abstützelementes ist es einem Benutzer in einfacher Weise ermöglicht, beim Anheben der Ablage in die angehobene Endposition kurz vor Erreichen der angehobenen Endposition die Ablage ein Stück weit entgegen der Auszugsrichtung zu schieben.

Die damit einhergehende Bewegung des Aktivators entlang des Abstützelementes bewirkt eine zuverlässige Arretierung des Arretiermechanismus und unterstützt ein sicheres Erreichen der für die Arretierung notwendigen Endpostion der Ablage.

Das in Auszugsrichtung als Anschlag ausgebildete vordere Ende der Führungsschräge des Aktivators dient zur Begrenzung eines Verschiebens der Laufschiene entgegen der Auszugsrichtung bis in die angehobene Endposition der Schiebe-Schwenkmechanik, bei der der Arretiermechanismus die Arretierstellung erreicht hat. Dadurch wird ein zu weites Einschieben der Ablage vor Erreichen der angehobenen Endposition der Ablage verhindert.

Vorteilhafte Ausführungsvarianten der Erfindung sind Gegenstand der Unteransprüche.

Gemäß einer Ausführungsvariante der Erfindung weist der Arretiermechanismus einen an einem der Schwenkarme schwenkbar und federnd gehaltenen Steg mit einem in Richtung der Führungsschiene vorstehenden Bolzen auf, der entlang eines an der Führungsschiene befestigten Führungselementes von der die abgesenkte Endposition sichernden Arretierposition zumindest in die die angehobene Endposition sichernde Arretierposition führbar ist.

Diese Arretierpositionen sind nach einer bevorzugten Ausführungsvariante dadurch definiert, dass in dem Führungselement Arretiernuten vorgesehen sind, in denen der Bolzen in den jeweiligen Arretierpositionen einliegt. Während der Anhebe- oder Absenkbewegung der Schiebe-Schwenkmechanik wird der Bolzen entlang einer Führungsbahn, die an ihren Enden durch die Arretiernuten begrenzt ist, geführt, was eine exakte Koordination des Bewegungsablaufes der Schwenkarme ermöglicht.

Das Abstützelement ist gemäß einer bevorzugten Ausführungsvariante als aus dem ersten Schwenkarm hervorstehender Bolzen ausgebildet. Der Bolzen kann dabei an dem Abstützelement als separates Bauteil befestigt oder alternativ als Teil des Schwenkarms an diesem angeformt sein.

Gemäß einer alternativen Ausführungsvariante ist das Abstützelement als aus dem ersten Schwenkarm hervorstehendes, um eine senkrecht zu einer durch die Schwenkbewegung der Schwenkarme aufgespannten Ebene ausgerichteten Drehachse drehbares Rad ausgebildet, so dass bei Anheben der Ablage in ihre angehobene Endposition lediglich eine Rollreibung des drehbaren Rades zu überwinden ist, was die Leichtgängigkeit der Schiebe-Schwenkmechanik weiter verbessert.

Des Weiteren weist der Aktivator gemäß einer bevorzugten Ausführungsvariante einen ersten Anschlag auf, mit dem der Bolzen aus einer eine Schwenkbewegung der Schwenkarme sperrenden Position in der ersten Arretiernut beim Ausziehen der Laufschiene in einer Auszugsrichtung A herausbewegbar ist.

Um den Bolzen aus der zweiten Arretiernut und aus der in der angehobenen Position sperrenden Position heraus zu bewegen, weist der Aktivator bevorzugt einen rampenartig in Auszugsrichtung geneigten Steg auf, mit dem der Bolzen beim Ausziehen der Laufschiene in eine Ausziehrichtung herausbewegbar ist.

Damit ist dem Benutzer in einfacher Weise ermöglicht, durch geringfügiges Ausziehen der Ablage in Auszugsrichtung die Arretierung der Schiebe-Schwenkmechanik aufzuheben, so dass die Ablage aus der angehobenen Position in die abgesenkte Position oder umgekehrt verschwenkbar ist.

Nachfolgend werden Ausführungsbeispiele der Erfindung anhand der beiliegenden Zeichnungen näher erläutert. Es zeigen:
- Figuren 1 und 2: eine perspektivische Ansicht einer Ausführungsvariante einer erfindungsgemäßen Schiebe-Schwenkmechanik in vollständig abgesenkter Position sowie eine Detaildarstellung des mit II in Fig. 1 gekennzeichneten Bereichs,
- Figuren 3 und 4: perspektivische Ansichten der Schiebe-Schwenkmechanik aus Fig. 1 nach erfolgter Verschiebung der Laufschiene aus der Führungsschiene vor dem Anheben der Schiebe-Schwenkmechanik sowie eine Detaildarstellung des mit IV in Fig. 3 bezeichneten Bereichs;
- Figuren 5 und 6: perspektivische Darstellungen der Schiebe-Schwenkmechanik in einer Position, bei der die Schwenkbewegung der Schwenkarme freigegeben ist, wobei Fig. 6 eine Detaildarstellung des mit VI in Fig. 5 bezeichneten Ausschnitts darstellt;
- Figuren 7 und 8: den Fig. 5 und 6 entsprechende perspektivische Darstellungen der Schiebe-Schwenkmechanik während einer Schwenkbewegung, wobei Fig. 8 eine Detaildarstellung des mit VIII in Fig. 7 gekennzeichneten Ausschnitts darstellt;
- Figuren 9 und 10: den Fig. 7 und 8 entsprechende Darstellungen der Schiebe-Schwenkmechanik in weiter fortgeschrittenem Zustand der Verschwenkung kurz vor Erreichen der angehobenen Endposition, wobei Fig. 10 eine Detaildarstellung des mit X in Fig. 9 gekennzeichneten Ausschnitts darstellt;
- Figuren 11 und 12: den Fig. 9 und 10 entsprechende Darstellungen der Schiebe-Schwenkmechanik in der angehobenen Endposition, wobei Fig. 12 eine Detaildarstellung des mit XII in Fig. 11 gekennzeichneten Ausschnitts darstellt;
- Figur 13: eine perspektivische Ansicht der in Fig. 11 dargestellten Position der Schiebe-Schwenkmechanik aus einer anderen Perspektive;
- Figuren 14 und 15: den Fig. 11 und 12 entsprechende Ansichten der Schiebe-Schwenkmechanik während der Freigabe der Schiebe-Schwenkmechanik aus der oberen Arretierposition, wobei Fig. 15 eine Detaildarstellung des mit XV in Fig. 14 gekennzeichneten Ausschnitts darstellt.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Schiebe-Schwenkmechanik, Schwenkarme, Führungsschiene, Laufschiene, des Aktivators und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

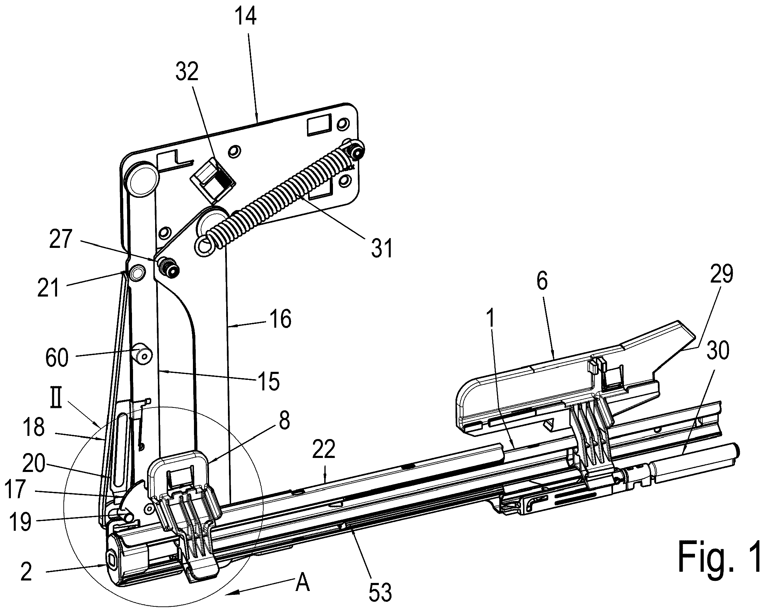

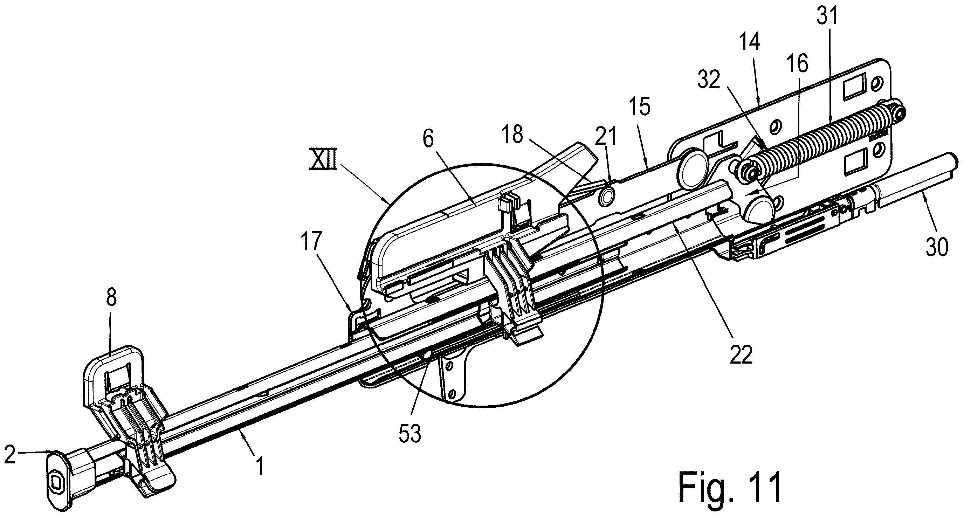

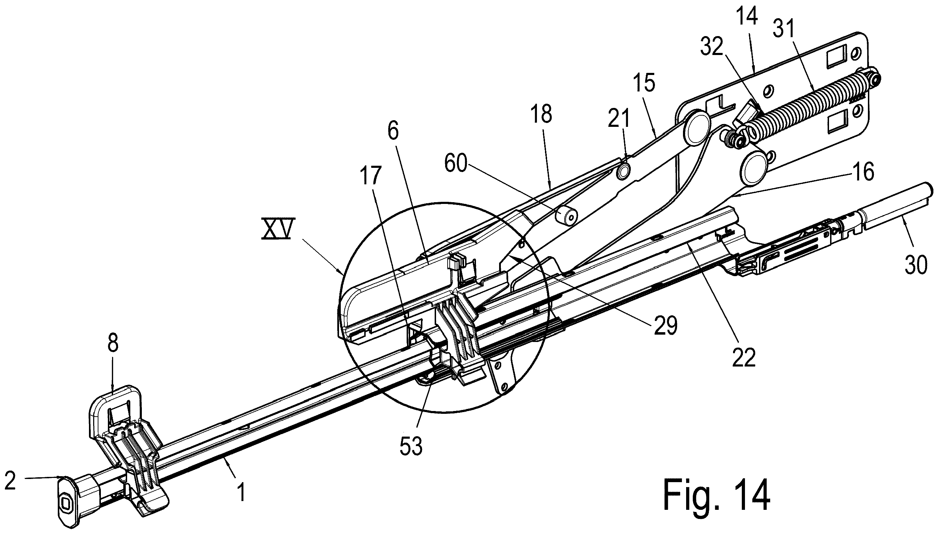

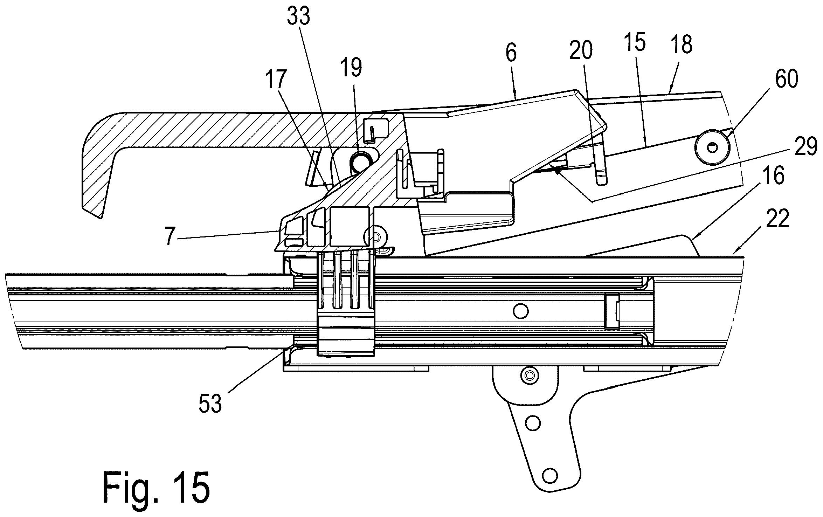

In den Figuren 1-15 ist eine Ausführungsvariante einer erfindungsgemäßen Schiebe-Schwenkmechanik gezeigt, wobei beispielhafte Positionen der Schiebe-Schwenkmechanik im Laufe eines Anhebevorgangs und eines anschließenden Absenkvorgangs dargestellt sind.

Wie beispielsweise in Figur 1 gezeigt ist, weist die Schiebe-Schwenkmechanik zwei parallel zueinander beabstandet angeordnete Schwenkarme 15, 16 auf. Die Schwenkarme 15, 16 sind dabei mit einem ersten Ende über ein Drehgelenk an einer Seitenwandhalterung 14 befestigt. Die Seitenwandhalterung 14 ihrerseits wird vorzugsweise an einer Seitenwand eines Möbels oder Haushaltsgerätes, beispielsweise eines Geschirrspülgerätes, montiert. Denkbar ist auch die Befestigung der ersten Enden der Schwenkarme 15, 16 direkt an der Seitenwand des Möbels oder Haushaltsgerätes. Unter einer Seitenwand wird ebenso die Innenwand bei Haushaltsgeräten verstanden.

Die von den ersten Enden beabstandeten zweiten Enden der Schwenkarme 15, 16 sind schwenkbar an einer Führungsschiene 22 einer Auszugsführung befestigt.

Die Auszugsführung weist dabei neben der Führungsschiene 22 zumindest eine Laufschiene 1 auf, die in der Führungsschiene 22 linear verfahrbar ist. Die Laufschiene 1 ist dabei vorzugsweise über ein Kugellager mit der Führungsschiene 22 gekoppelt. Ein Endanschlag 53 an der Führungsschiene dient dabei der Begrenzung des Laufweges der Laufschiene 1 in der Führungsschiene 22. Der Endanschlag 53 wirkt mit dem Kugellager zusammen. Es sind auch andere Formen von Endanschlägen an verschiedenen feststehenden oder beweglichen Teilen denkbar. Um den Auszug zu verlängern, kann zwischen Führungsschiene 22 und Laufschiene 1 mindestens eine weitere bewegliche Schiene angeordnet sein. Am in Auszugsrichtung A vorderen Ende der Laufschiene ist vorzugsweise ein Stopfen 2 angeordnet, der der Begrenzung des Laufweges der Laufschiene 1 in die Führungsschiene 22 entgegen der Auszugsrichtung dient.

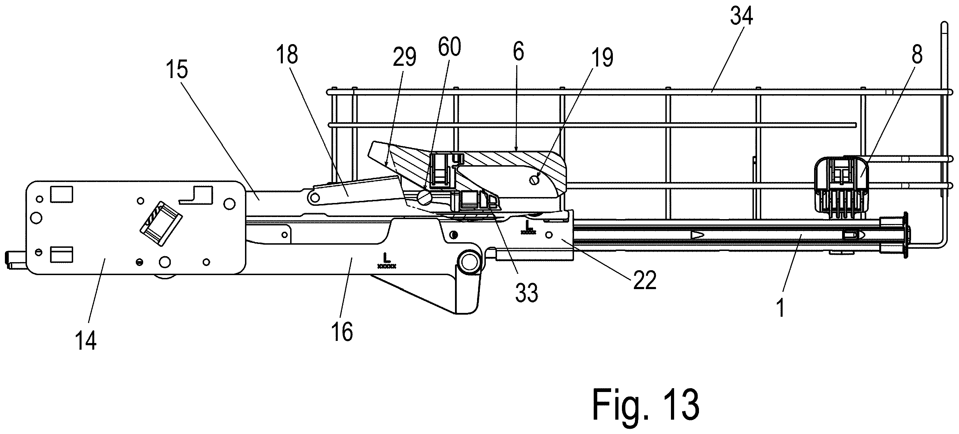

Zur Befestigung der Ablage 34 (gezeigt in Fig. 13) an der Schiebe-Schwenkmechanik sind an der Laufschiene 1 jeweils ein Aktivator 6 sowie eine Fixiervorrichtung 8 festgelegt, an denen die Ablage befestigbar, insbesondere verrastbar ist.

Details zur Befestigung der Ablage an dem Aktivator und der Fixiervorrichtung 8 sind in der zuvor genannten WO 2014/03 3092 A1 näher beschrieben, deren Inhalt hiermit in diese Anmeldung zur Erläuterung zahlreicher Details der Schiebe-Schwenkmechanik aufgenommen wird.

Wie Fig. 1 des Weiteren zu entnehmen ist, ist an der Führungsschiene 22 eine Dämpfungseinheit 30 angeordnet, die mithilfe des Aktivators 6 beim Einfahren der Ablage 34 in ihre Endposition im Korpus des Möbels bzw. im Nutzraum des Haushaltsgerätes aktivierbar ist.

Denkbar ist hier außerdem die Anordnung einer Selbsteinzugsvorrichtung oder einer kombinierten Selbsteinzugs-Dämpfungsvorrichtung, mit der die Ablage 34 vorzugsweise in ihre Endposition im Möbelkorpus- oder Haushaltsgerätenutzraum eingezogen wird.

Des Weiteren weist die Schiebe-Schwenkmechanik einen Arretiermechanismus auf, der an der Führungsschiene 22 und an einem der Schwenkarme 15, 16 angeordnet und durch den an der Laufschiene 1 fixierten Aktivator 6 betätigbar ist.

Der Arretiermechanismus verhindert eine Schwenkbewegung der Schiebe-Schwenkmechanik in einer angehobenen und in einer abgesenkten Endposition der Schiebe-Schwenkmechanik.

Der Arretiermechanismus besteht dabei vorzugsweise aus einem an einem der Schwenkarme 15, 16 schwenkbar und federnd gehaltenen Steg 18, an dem ein in Richtung der Führungsschiene 22 vorstehender Bolzen 19 vorgesehen ist.

Der Steg 18 ist dabei vorzugsweise über einen Drehbolzen 21 schwenkbar am Schwenkarm 15 gehalten. Zur federnden Halterung dient ein Federelement 20, das sich einerseits am Steg 18 und andererseits am Schwenkarm 15 abstützt.

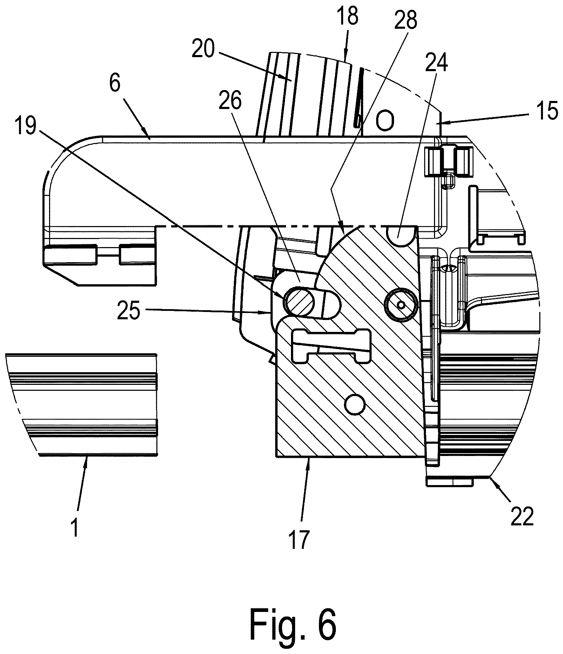

Der Bolzen 19 steht dabei mit einem Führungselement 17 in Wirkverbindung. Dieses Führungselement 17, beispielsweise gezeigt in Fig. 6, besteht dabei im Wesentlichen aus einem plattenförmigen Element, mit einer als Führungsbahn 28 ausgebildeten Kante, die von zwei Arretiernuten 23, 24 begrenzt ist.

Die Arretierpositionen des Arretiermechanismus sind dabei diejenigen Positionen, bei denen der an dem federnd gehaltenen Steg 18 angeordnete Bolzen 19 in einer der beiden Arretiernuten 23, 24 einliegt.

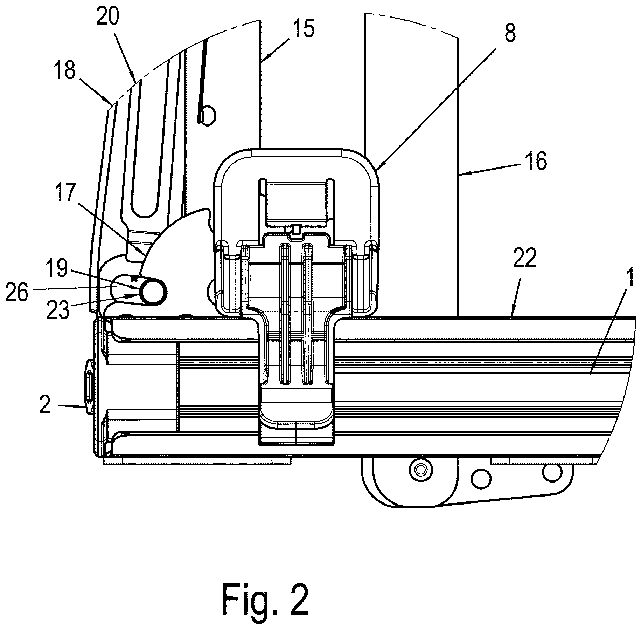

Die untere Arretierposition ist in den Fig. 1 und 2 dargestellt.

Der erste Schwenkarm 15 weist zur Führung des Bolzens 19 des Weiteren ein senkrecht zur Längsachse des ersten Schwenkarms 15 sich erstreckendes Ende 25 mit einer Führungsnut 26 auf, durch das der Bolzen 19 sich erstreckt.

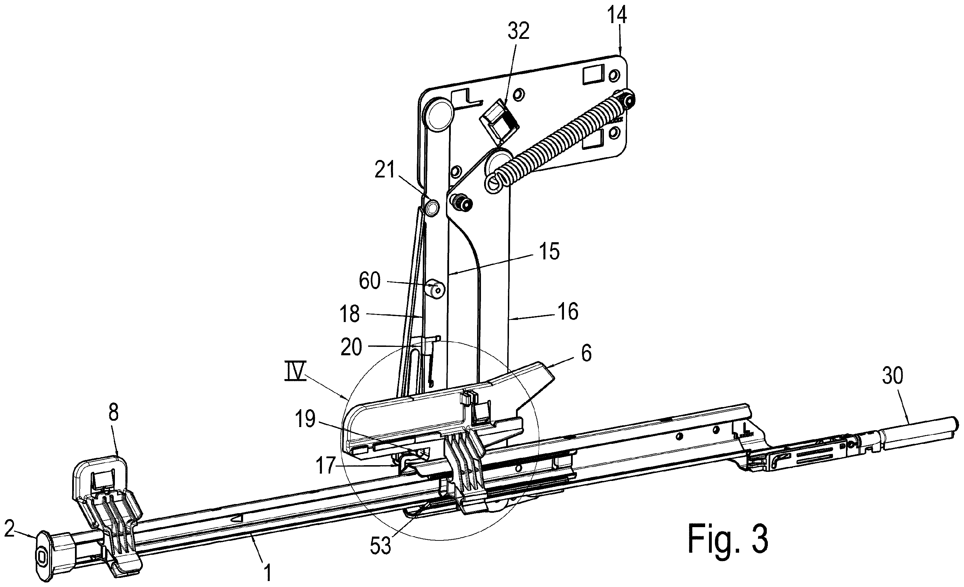

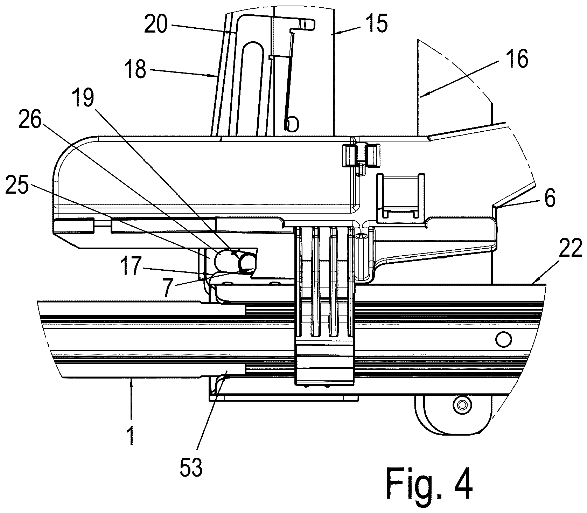

Wie in den Fig. 3 und 4 gezeigt ist, weist der Aktivator 6 einen ersten Anschlag 7 auf, mit dem der Bolzen 19 aus einer eine Schwenkbewegung der Schwenkarme 15, 16 sperrenden Position in der ersten Arretiernut 23 beim Ausziehen der Laufschiene 1 in einer Auszugsrichtung A herausbewegbar ist.

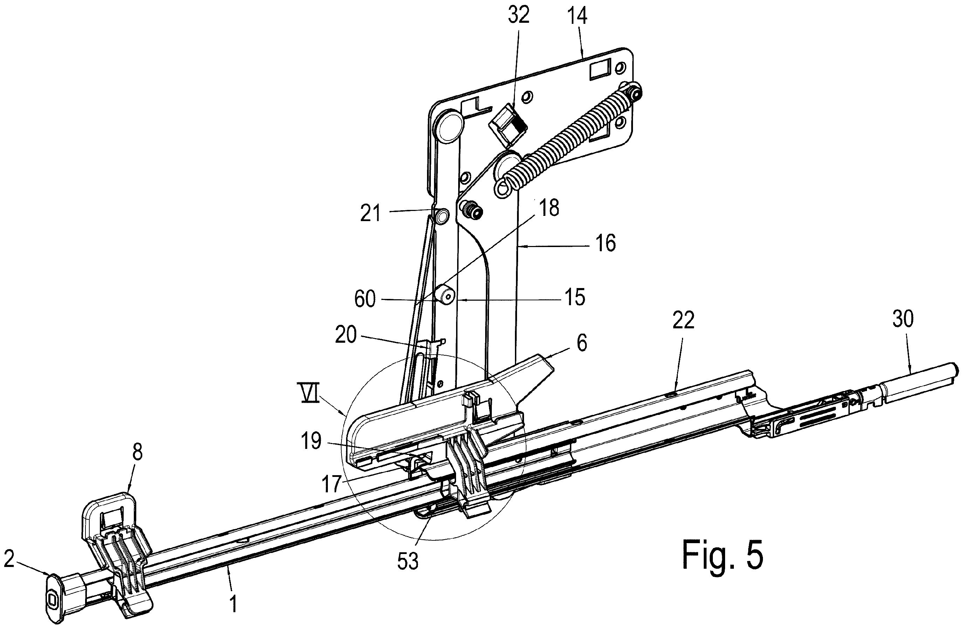

Die in den Fig. 5 und 6 gezeigte Position der Laufschiene 1 und des Aktivators 6 sowie des in Fig. 6 gezeigten Bolzens 19 zeigt die Freigabestellung des Arretiermechanismus, bei der nunmehr eine Verschwenkung der Schwenkarme 15, 16 möglich ist.

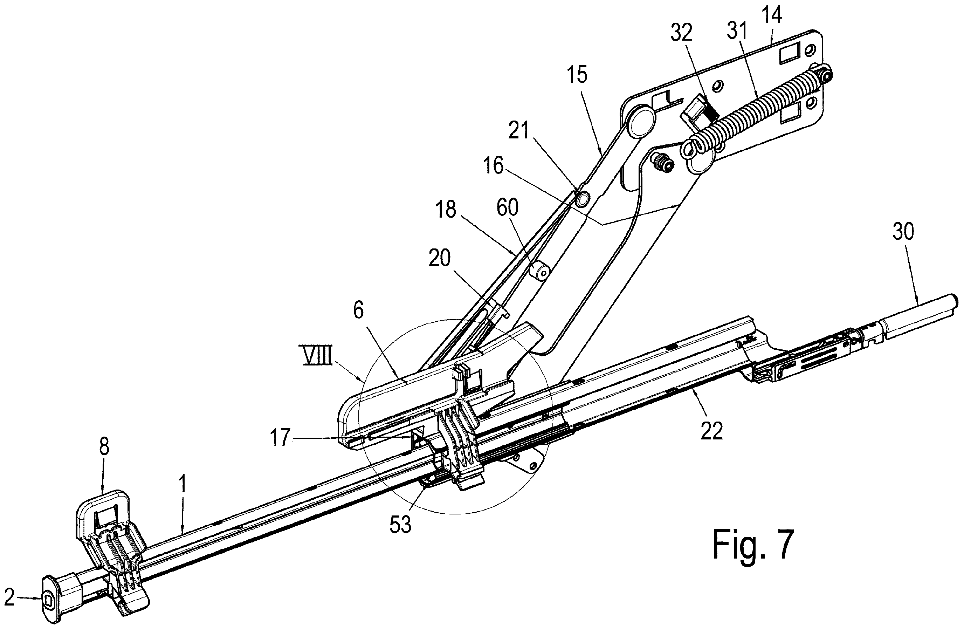

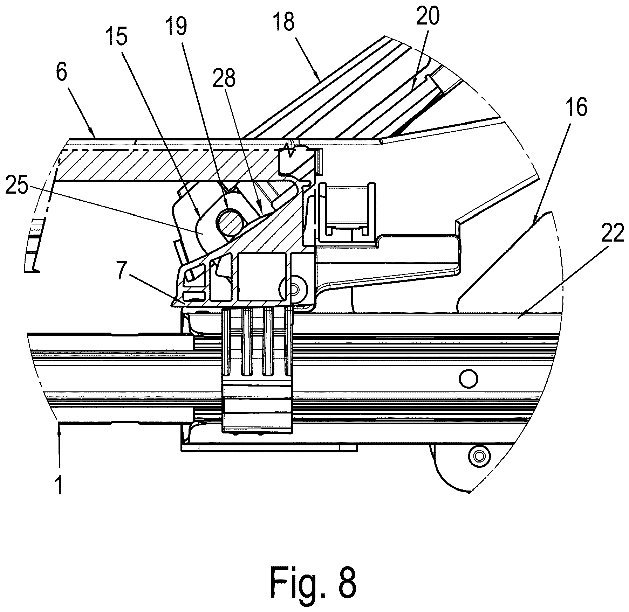

Eine teilweise angehobene Stellung der Schiebe-Schwenkmechanik ist in den Fig. 7 und 8 dargestellt. In dieser Position ist die Laufschiene 1 vollständig aus der Führungsschiene 22 nach vorne geschoben.

Wie in Fig. 8 zu erkennen ist, wird während des Anhebevorgangs durch die Verschwenkung der Schwenkarme 15, 16 der Bolzen 19 entlang der Führungsbahn 28 an dem Führungselement entlang von der ersten Arretiernut 23 in Richtung der zweiten Arretiernut 24 bewegt.

Durch das Aufliegen des Bolzens 19 auf der Führungskurve 28 ist der federnd gehaltene Steg 18 aus seiner Ruhestellung gegenüber dem ersten Schwenkarm 15 ausgelenkt.

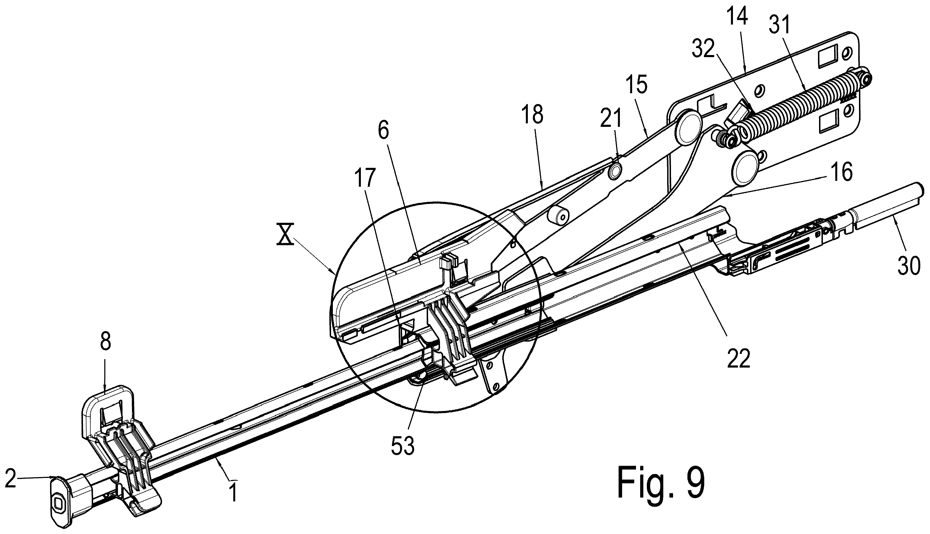

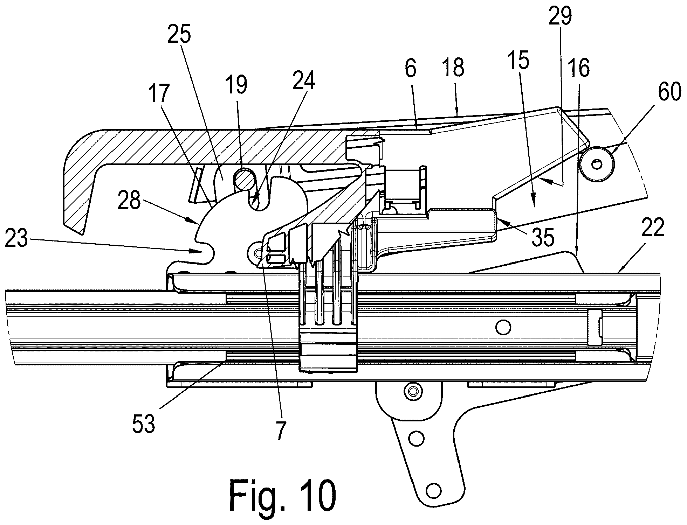

Fig. 9 und 10 zeigen eine Stellung der Schiebe-Schwenkmechanik kurz vor Erreichen der oberen Endposition, bei der der Bolzen 19 nahezu die zweite Arretiernut 24 erreicht hat. Um ein sicheres Erreichen der für die Arretierung notwendigen Endpostion der Ablage zu realisieren, ist die Führungsschräge 29 so ausgebildet, dass der Benutzer dazu veranlasst wird, die Ablage 34 und damit die Laufschiene 1 und damit den Aktivator 6 ein Stück weit entgegen der Auszugsrichtung A in Richtung des Korpus des Möbels oder in Richtung des Nutzraumes des Haushaltsgerätes zu verschieben.

Dabei wird ein in Auszugsrichtung A hinteres Ende des Aktivators 6 auf ein an dem ersten Schwenkarm 15 ortsfest angeordnetes Abstützelement 60 aufgeschoben, mit dem der Arretiermechanismus zum Anheben der Schiebe-Schwenkmechanik in eine die angehobene Endposition 7 darstellende Arretierstellung bewegbar ist.

Das Abstützelement 60 ist dabei, wie in den Fig. 9, 10 und 12 beispielhaft gezeigt, als aus dem ersten Schwenkarm 15 hervorstehender Bolzen ausgebildet.

Dieser Bolzen kann dabei als separates Bauteil an dem ersten Schwenkarm 15 befestigt oder auch als einstückig mit dem ersten Schwenkarm 15 ausgebildeter angeformter Bolzen ausgebildet sein.

Denkbar ist auch, das Abstützelement 60 als aus dem ersten Schwenkarm 15 hervorstehendes und um eine senkrecht zu einer durch die Schwenkbewegung der Schwenkarme 15, 16 aufgespannten Ebene ausgerichteten Drehachse drehbares Rad auszubilden.

Bei der Weiterbewegung der Ablage in Richtung des Korpus des Möbels oder in Richtung des Nutzraumes des Haushaltsgerätes stützt sich das als Führungsschräge 29 ausgebildete hintere Ende des Aktivators 6, bei dem die untere Kante rampenartig in Auszugsrichtung A abfällt, auf dem Abstützelement 60 ab.

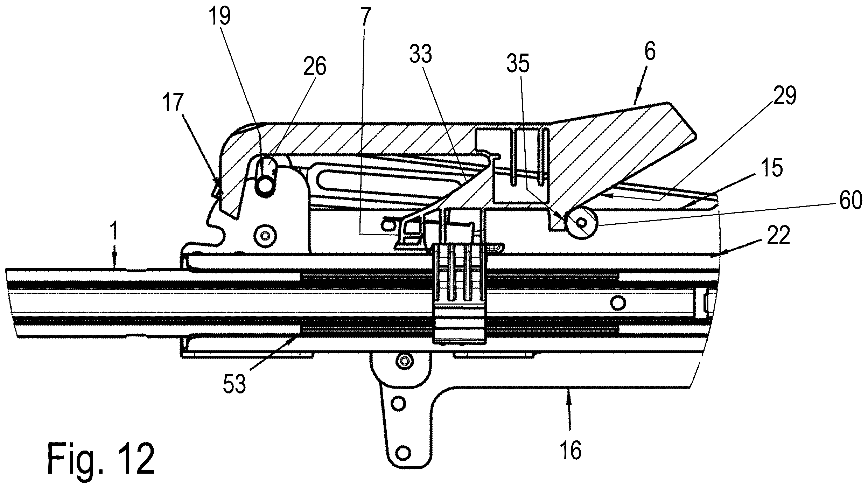

Dabei erfolgt gleichzeitig die waagerechte oder nahezu waagerechte Ausrichtung der beiden Schwenkarme 15, 16 und, wie in Fig. 12 dargestellt, das Einrücken des Bolzens 19 in die zweite Arretiernut 24 des Führungselements 17.

Ein Weiterschieben der Ablage und damit der Laufschiene 1 bzw. des Aktivators 6 in Richtung des Korpus des Möbels oder in Richtung des Nutzraumes des Haushaltsgerätes wird durch einen Anschlag 35 am unteren Ende der rampenartigen Führungsschräge 29 des hinteren Teils des Aktivators 6 verhindert.

Fig. 13 zeigt die Schiebe-Schwenkmechanik in dieser Position von der gegenüberliegenden Seite. Gut zu erkennen ist das Abstützelement 60 am unteren Ende der Führungsschräge 29 des Aktivators 6.

Um nach erfolgter Be- oder Entladung der Ablage 34 die Ablage wieder zurück in den Korpus des Möbels oder in den Nutzraum des Haushaltsgerätes herunterzuschwenken, wird die Ablage und damit die Laufschiene 1 und damit der Aktivator 6 zunächst ein kurzes Stück in Auszugsrichtung A bewegt.

Dabei untergreift ein rampenartig in Auszugsrichtung A geneigter Steg 33 des Aktivators 6 den Bolzen 19 und hebt ihn bei der Bewegung des Aktivators 6 in Auszugsrichtung aus der zweiten Arretiernut 24 heraus und gibt damit die Schwenkbewegung der Schiebe-Schwenkmechanik frei, so dass nun ein Absenken der Ablage 34 durch Verschwenkung der Schwenkarme 15, 16 in die untere Endposition erfolgen kann.

Zur Unterstützung der Anhebe- bzw. Absenkbewegung der Ablage 34 ist bevorzugt an wenigstens einer der Seitenwände oder der Seitenwandhalterung 14 eine Anhebe- und/oder Absenkhilfe 31 vorgesehen, mit der die Schwenkbewegung der Schwenkarme 15, 16 unterstützt wird.

Die Anhebe- oder Absenkhilfe 31 ist dabei bevorzugt als Zugfeder ausgebildet, die an jeweiligen Bolzen 27 einerseits an der Seitenwandhalterung oder der Seitenwand und andererseits am zweiten Schwenkarm 16 befestigt ist.

Um eine über die obere Endposition der Schwenkarme 15, 16 hinausgehende Schwenkbewegung der Schwenkarme 15, 16 zu verhindern, ist an der Seitenwandhalterung 14 bevorzugt ein Anschlag 32 vorgesehen, der bei Erreichen der oberen Endposition des zweiten Schwenkarms 16 an diesem anschlägt.

### Bezugszeichenliste

- 1: Laufschiene
- 2: Stopfen

- 6: Aktivator
- 7: Anschlag
- 8: Fixiervorrichtung

- 14: Seitenwandhalterung
- 15: Schwenkarm
- 16: Schwenkarm
- 17: Führungselement
- 18: Steg
- 19: Bolzen
- 20: Federelement
- 21: Drehbolzen
- 22: Führungsschiene
- 23: Arretiernut
- 24: Arretiernut
- 25: Ende
- 26: Führungsnut
- 27: Bolzen
- 28: Führungsbahn
- 29: Führungsschräge
- 30: Dämpfungseinheit
- 31: Anhebe- oder Absenkhilfe
- 32: Anschlag
- 33: Steg
- 34: Ablage
- 35: Anschlag

- 53: Endanschlag

- 60: Abstützelement

- A: Auszugsrichtung

## Patentansprüche

1. Schiebe-Schwenkmechanik einer Ablage (34) eines Möbels oder Haushaltsgerätes zum Ausziehen und Anheben der Ablage (34) aus einem Korpus des Möbels oder aus einem Nutzraum des Haushaltsgerätes, insbesondere eines Geschirrspülgerätes, aufweisend
- einen an mindestens einer der Seitenwände des Korpus bzw. des Nutzraumes mit einem ersten Ende parallel zur Ebene der Seitenwände drehbar festgelegten ersten Schwenkarm (15),
- einen an der mindestens einen der Seitenwände des Korpus bzw. des Nutzraumes mit einem ersten Ende parallel zur Ebene der Seitenwände drehbar festgelegten zweiten Schwenkarm (16),
- wobei die Schwenkarme (15, 16) parallel zueinander beabstandet angeordnet sind,
- wobei an jeweiligen zweiten Enden der Schwenkarme (15, 16) eine Führungsschiene (22) derart parallel zur Ebene der Seitenwände schwenkbar festgelegt ist, dass die Führungsschiene (22) aus einer unteren Position innerhalb des Korpus bzw. des Nutzraumes in eine angehobene, obere Position zumindest teilweise außerhalb des Korpus bzw. des Nutzraumes verschwenkbar ist,
- zumindest eine in der Führungsschiene (22) linear verschiebbare Laufschiene (1), an der die Ablage (34) befestigt ist,
- wobei die Schiebe-Schwenkmechanik einen an der Führungsschiene (22) und an einem der Schwenkarme (15, 16) angeordneten und durch einen an der Laufschiene (1) fixierten Aktivator (6) betätigbaren Arretiermechanismus zur Verhinderung einer Schwenkbewegung der Schiebe-Schwenkmechanik in einer angehobenen und einer abgesenkten Endposition aufweist,
**dadurch gekennzeichnet, dass**
- an dem ersten Schwenkarm (15) ein mit einer Führungsschräge(29) des Aktivators (6) zusammenwirkendes Abstützelement (60) ortsfest angeordnet ist, mit dem der Arretiermechanismus beim Anheben der Schiebe-Schwenkmechanik in eine die angehobene Endposition sichernde Arretierstellung bewegbar ist, wobei ein in Auszugsrichtung (A) vorderes Ende der Führungsschräge (29) des Aktivators (6) als Anschlag (35) ausgebildet ist.

2. Schiebe-Schwenkmechanik nach Anspruch 1, **dadurch gekennzeichnet, dass** der Arretiermechanismus einen an einem der Schwenkarme (15, 16) schwenkbar und federnd gehaltenen Steg (18) mit einem in Richtung der Führungsschiene (22) vorstehenden Bolzen (19) aufweist, der entlang eines an der Führungsschiene (22) befestigten Führungselementes (17) von der die abgesenkte Endposition sichernden Arretierposition zumindest in die die angehobene Endposition sichernde Arretierposition führbar ist.

3. Schiebe-Schwenkmechanik nach Anspruch 2, **dadurch gekennzeichnet, dass** das Führungselement (17) jeweilige Arretiernuten (23, 24) aufweist, in denen der Bolzen (19) in den jeweiligen Arretierpositionen in einliegt, wobei die Arretiernuten (23, 24) eine Führungsbahn (28) des Führungselementes (17) begrenzen, entlang der der Bolzen (19) von einer der Arretierpositionen in die zweite Arretierpositionen führbar ist.

4. Schiebe-Schwenkmechanik nach einem der vorstehenden Ansprüche, **dadurch gekennzeichnet, dass** das Abstützelement (60) als aus dem ersten Schwenkarm (15) hervorstehender Bolzen ausgebildet ist.

5. Schiebe-Schwenkmechanik nach Anspruch 4, **dadurch gekennzeichnet, dass** das Abstützelement (60) an dem ersten Schwenkarm (15) befestigt oder an diesem angeformt ist.

6. Schiebe-Schwenkmechanik nach einem der vorstehenden Ansprüche 1 bis 3, **dadurch gekennzeichnet, dass** das Abstützelement (60) als aus dem ersten Schwenkarm (15) hervorstehendes, um eine senkrecht zu einer durch die Schwenkbewegung der Schwenkarme (15, 16) aufgespannten Ebene ausgerichteten Drehachse drehbares Rad ausgebildet ist.

7. Schiebe-Schwenkmechanik nach einem der vorstehenden Ansprüche, **dadurch gekennzeichnet, dass** der Aktivator (6) einen ersten Anschlag (7) aufweist, mit dem der Bolzen (19) aus einer eine Schwenkbewegung der Schwenkarme (15, 16) sperrenden Position in der ersten Arretiernut (23) beim Ausziehen der Laufschiene (1) in einer Auszugsrichtung (A) herausbewegbar ist.

8. Schiebe-Schwenkmechanik nach einem der vorstehenden Ansprüche, **dadurch gekennzeichnet, dass** der Aktivator (6) einen rampenartig in Auszugsrichtung (A) geneigten Steg (33) aufweist, mit dem der Bolzen (19) aus einer eine Schwenkbewegung der Schwenkarme (15, 16) sperrenden Position in der zweiten Arretiernut (24) beim Ausziehen der Laufschiene (1) in einer Ausziehrichtung (A) herausbewegbar ist.

9. Möbel mit einem Möbelkorpus und mindestens einer in dem Möbelkorpus mit einer Schiebe-Schwenkmechanik fixierten Ablage (34), mit der die Ablage (34) aus dem Möbelkorpus auszieh- und anhebbar ist, **dadurch gekennzeichnet, dass** die Schiebe-Schwenkmechanik gemäß einem oder mehreren der vorstehenden Ansprüche ausgebildet ist.

10. Haushaltsgerät, insbesondere Spülmaschine oder Gargerät mit mindestens einer an Innenseiten eines Nutzraums, insbesondere Spülraumes oder Garraums mit einer Schiebe-Schwenkmechanik fixierten Ablage (34), mit der die Ablage (34) aus dem Nutzraum auszieh- und anhebbar ist, **dadurch gekennzeichnet, dass** die Schiebe-Schwenkmechanik gemäß einem oder mehreren der vorstehenden Ansprüche 1 bis 8 ausgebildet ist.

## Claims

1. A sliding-pivoting mechanism of a shelf (34) of a piece of furniture or domestic appliance for pulling out and lifting the shelf (34) from a body of the piece of furniture or a useful space of the domestic appliance, especially a dishwasher, comprising
- a first pivot arm (15) which is rotatably fixed to at least one of the side walls of the furniture body or the useful space with a first end parallel to the plane of the side walls,
- a second pivot arm (16) which is rotatably fixed to at least one of the side walls of the furniture body or the useful space with a first end parallel to the plane of the side walls,
- wherein the pivot arms (15, 16) are arranged in parallel and at a distance from each other,
- wherein a guide rail (22) is pivotably fastened to the respective second ends of the pivot arms (15, 16) parallel to the plane of the side walls in such a way that the guide rail can (22) be pivoted from a bottom position within the furniture body or the useful space to a lifted, upper position at least partly outside the furniture body or the useful space,
- at least one running rail (1) which is linearly displaceable in the guide rail (22) and on which the shelf (34) is fixed,
- wherein the sliding-pivoting mechanism comprises a locking mechanism, which is arranged on the guide rail (22) and on one of the pivot arms (15, 16) and can be actuated by an activator (6) fixed to the running rail (1), for preventing a pivoting movement of the sliding-pivoting mechanism in a lifted and a lowered end position,
**characterized in that**
- a support element (60) is arranged in a stationary manner on the first pivot arm (15), which support element interacts with a guide bevel (29) of the activator (6) and with which the locking mechanism can be moved during lifting of the sliding-pivoting mechanism to a locking position which secures the lifted end position, wherein one end of the guide bevel (29) of the activator (6) which is disposed at the front in the pull-out direction (A) is formed as a limit stop (35).

2. A sliding-pivoting mechanism according to claim 1, **characterized in that** the locking mechanism comprises a web (18) which is pivotably and resiliently mounted on one of the pivot arms (15, 16) and comprises a pin (19), which pin protrudes in the direction of the guide rail (22) and can be guided along a guide element (17) fixed on the guide rail (22) from the locking position securing the lowered end position at least to the locking position securing the lifted end position.

3. A sliding-pivoting mechanism according to claim 2, **characterized in that** the guide element (17) comprises respective locking grooves (23, 24) in which the pin (19) rests in the respective locking positions, wherein the locking grooves (23, 24) delimit a guide track (28) of the guide element (17), along which the pin (19) can be guided from one of the locking positions to the second locking position.

4. A sliding-pivoting mechanism according to one of the preceding claims, **characterized in that** the support element (60) is formed as a pin protruding from the first pivot arm (15).

5. A sliding-pivoting mechanism according to claim 4, **characterized in that** the support element (60) is fixed to the first pivot arm (15) or is integrally attached thereon.

6. A sliding-pivoting mechanism according to one of the preceding claims 1 to 3, **characterized in that** the support element (60) is formed as a wheel which protrudes from the first pivot arm (15) and can be rotated about a rotational axis oriented perpendicularly to a plane spanned by the pivoting movement of the pivot arms (15, 16).

7. A sliding-pivoting mechanism according to one of the preceding claims, **characterized in that** the activator (6) comprises a first limit stop (7) with which the pin (19) can be moved out from a position blocking a pivoting movement of the pivoting arms (15, 16) in the first locking groove (23) when pulling the running rail (1) in a pull-out direction (A).

8. A sliding-pivoting mechanism according to one of the preceding claims, **characterized in that** the activator (6) preferably comprises a web (33) which is inclined in the manner of a ramp in the pull-out direction (A), with which the pin (19) can be moved out from a position blocking a pivoting movement of the pivoting arms (15, 16) in the second locking groove (24) when pulling the running rail (1) in a pull-out direction (A).

9. A piece of furniture with a furniture body and at least one shelf (34) fixed in the furniture body with a sliding-pivoting mechanism, with which the shelf (34) can be pulled out of and lifted from the furniture body, **characterized in that** the sliding-pivoting mechanism is formed according to one or several of the preceding claims.

10. A domestic appliance, especially a dishwasher or a cooking appliance, having at least one shelf (34) fixed to the inner sides of a useful space, especially a dishwashing space or a cooking space, by a sliding-pivoting mechanism, with which the shelf (34) can be pulled out of and lifted from the useful space, **characterized in that** the sliding-pivoting mechanism is formed according to one or several of the preceding claims 1 to 8.

## Revendications

1. Mécanisme coulissant et pivotant d'un bac (34) d'un meuble ou d'un appareil électroménager, pour extraire et soulever le bac (34) d'un corps du meuble ou d'un espace utile de l'appareil électroménager, en particulier un lave-vaisselle, comprenant
- un premier bras pivotant (15) fixé avec possibilité de rotation sur au moins une des parois latérales du corps de meuble ou de l'espace utile,
- un deuxième bras pivotant (16) fixé avec possibilité de rotation sur au moins une des parois latérales du corps de meuble ou de l'espace utile, avec une première extrémité parallèle au plan des parois latérales,
- les bras pivotants (15, 16) étant disposés parallèlement l'un à l'autre,
- les deuxièmes extrémités respectives des bras pivotants (15, 16) portant un rail de guidage (22) capable de pivoter parallèlement au plan des parois latérales de telle manière que le rail de guidage (22) puisse pivoter d'une position inférieure à l'intérieur du corps ou de l'espace utile à une position supérieure relevée où il est partiellement sorti du corps ou de l'espace utile,
- au moins un rail de translation (1) déplaçable de façon linéaire sur le rail de guidage (22), sur lequel le bac (34) est fixé,
- dans lequel le mécanisme coulissant et pivotant présente un mécanisme de blocage disposé sur le rail de guidage (22) et sur l'un des bras pivotants (15, 16) et pouvant être actionné par un activateur (6) fixé sur le rail de translation (1), destiné à empêcher un pivotement du mécanisme coulissant et pivotant dans des positions de fin de course relevée et abaissée,
**caractérisé en ce qu'**il est prévu disposé de façon stationnaire sur le premier bras pivotant (15) un élément d'appui (60) coopérant avec un biseau de guidage (29) de l'activateur (6), avec lequel le mécanisme de blocage peut être déplacé, lors du soulèvement du mécanisme coulissant et pivotant, dans une position de blocage fixant la position de fin de course relevée, une extrémité antérieure dans le sens d'extraction (A) du biseau de guidage (29) de l'activateur (6) étant conformée comme une butée (35).

2. Mécanisme coulissant et pivotant selon la revendication 1, **caractérisé en ce que** le mécanisme de blocage comprend une ailette (18) retenue de façon pivotante et élastique sur l'un des bras pivotants (15, 16), avec un boulon (19) dépassant en direction du rail de guidage (22) qui peut être guidé le long d'un élément de guidage (17) fixé au rail de guidage (22) de la position de blocage fixant la position de fin de course abaissée à la position de blocage fixant la position de fin de course relevée, au minimum.

3. Mécanisme coulissant et pivotant selon la revendication 2, **caractérisé en ce que** l'élément de guidage (17) présente des rainures de blocage correspondantes (23, 24) dans lesquelles le boulon (19) s'insère dans les positions de blocage respectives, lesquelles rainures de blocage (23, 24) délimitent une piste de guidage (28) de l'élément de guidage (17) le long de laquelle le boulon (19) peut être guidé de l'une des positions de blocage à la deuxième position de blocage.

4. Mécanisme coulissant et pivotant selon l'une des revendications précédentes, **caractérisé en ce que** l'élément d'appui (60) est réalisé comme un boulon qui dépasse du premier bras pivotant (15).

5. Mécanisme coulissant et pivotant selon la revendication 4, **caractérisé en ce que** l'élément d'appui (60) est fixé sur le premier bras pivotant (15) ou formé sur celui-ci.

6. Mécanisme coulissant et pivotant selon l'une des revendications précédentes, **caractérisé en ce que** l'élément d'appui (60) est réalisé comme une roue dépassant du premier bras pivotant (15) et pouvant tourner autour d'un axe de rotation perpendiculaire à un plan délimité par le mouvement pivotant des bras pivotants (15, 16).

7. Mécanisme coulissant et pivotant selon l'une des revendications précédentes, **caractérisé en ce que** l'activateur (6) présente une première butée (7) avec laquelle le boulon (19) peut être déplacé hors d'une position bloquant le mouvement pivotant des bras pivotants (15, 16) dans la première rainure de blocage (23) lors de l'extraction du rail de translation (1) dans une direction d'extraction (A).

8. Mécanisme coulissant et pivotant selon l'une des revendications précédentes, **caractérisé en ce que** l'activateur (6) présente une ailette (33) inclinée pour former une rampe dans la direction d'extraction (A), avec laquelle le boulon (19) peut être déplacé hors d'une position bloquant le mouvement des bras pivotants (15, 16) dans la deuxième rainure de blocage (24) lors de l'extraction du rail de translation (1) dans une direction d'extraction (A).

9. Meuble avec un corps de meuble et au moins un bac (34) fixé dans le corps de meuble avec un mécanisme coulissant et pivotant, avec lequel le bac (34) peut être extrait et soulevé du corps de meuble, **caractérisé en ce que** le mécanisme coulissant et pivotant est conformé selon une ou plusieurs des revendications précédentes.

10. Appareil électroménager, en particulier machine à laver la vaisselle ou appareil de cuisson, avec au moins un bac (34) fixé sur des faces intérieures d'un espace utile, en particulier un espace de lavage ou un espace de cuisson, avec lequel le bac (34) peut être extrait et soulevé, **caractérisé en ce que** le mécanisme coulissant et pivotant est conçu selon une ou plusieurs des revendications 1 à 8.
